# EUROPEAN PATENT APPLICATION

(11) **EP 1 410 843 A1**
(43) Date of publication of application: **21.04.2004**
(21) Application number: 02079384.0
(22) Date of filing: 17.10.2002
(51) Int. Cl.: B01J 19/18, B01J 19/24, C08F 10/00, C08F 2/14

(54) **Slurry loop polyolefin reactor**

(71) Applicant: ATOFINA Research, 7181 Seneffe (Feluy) (BE)
(72) Inventor: Lewalle, André, 1050 Bruxelles (BE); Fouarge, Louis, 1700 Dilbeek (BE)

(57) **Abstract**

A slurry loop reactor comprising one or more loops and having on at least one of the loops, either a by-pass line (2) connecting two points of the same main loop (1) by an alternate route having a different transit time than that of the main route and/or a modified circulation pump with internal recirculation and/or a mixing element that improves the homogeneity of the circulating slurry.

## Description

The present invention relates to the polymerization of olefin monomers in a slurry loop reactor.

High density polyethylene (HDPE) was first produced by addition polymerization carried out in a liquid that was a solvent for the resulting polymer. That method was rapidly replaced by polymerisation under slurry conditions according to Ziegler or Phillips. More specifically slurry polymerisation was carried out continuously in a pipe loop reactor. A polymerization effluent is formed which is a slurry of particulate polymer solids suspended in a liquid medium, ordinarily the reaction diluent and unreacted monomer (see for Example US-A-2,285,721). It is desirable to separate the polymer and the liquid medium comprising an inert diluent and unreacted monomers without exposing the liquid medium to contamination so that said liquid medium can be recycled to the polymerization zone with minimal or no purification. As described in US-A-3,152,872, a slurry of polymer and the liquid medium is collected in one or more settling legs of the slurry loop reactor from which the slurry is periodically discharged to a flash chamber thus operating in a batch-wise manner.

The mixture is flashed in order to remove the liquid medium from the polymer. It is afterwards necessary to recompress the vaporized polymerization diluent to condense it to a liquid form prior to recycling it as liquid diluent to the polymerisation zone after purification if necessary.

Settling legs are often required to improve the polymer concentration in the slurry extracted from the reactor; They however present several problems as they impose a batch technique onto a continuous process.

EP-A-0,891,990 and US-A-6,204,344 disclose two methods for decreasing the discontinuous behaviour of the settling legs and thereby for increasing the solids concentration. One method consists in replacing the discontinuous operation of the settling legs by a continuous retrieval of enriched slurry. Another method consists in using a more aggressive circulation pump.

These methods slightly improve the continuity of the circulation and thereby the solids content, but there is still ample room for improvement. Indeed, slurry loop reactors are not perfectly mixed reactors. The slurry is composed of a liquid phase and a solid phase. Because of the significant differences between the specific masses of the liquid and of the solids, and because of the very low viscosity of the liquid, the components of the slurry are separated by centrifugal force when traveling through a curve with the solids being pushed towards the outer part of the curve. There is thus a concentration profile in the normal section of the reactor. The centrifugal force exerted by the circulation pump is also very large and decreases significantly the solids concentration in the middle of the reactor accumulating the solids close to the walls. There are numerous other causes of heterogeneity such as for example:
- the nature of the feed coming to the reactor that, under standard conditions, is made of mixed liquid and gas phases;
- discontinuous catalyst feed, currently occurring with chromium-based catalysts;
- discontinuous settling legs extraction.

When the reactor is pushed to its limits of operability, the energy consumption of the circulation pump increases on average and becomes less stable and the reactor temperature becomes unstable.

It is an object of the present invention to refrain the onset of the instabilities described hereabove.

It is another object of the present invention to produce a polymer with improved bulk density and reduced molecular weight distribution.

It is also an aim of the present invention to improve the catalyst productivity and therefore the reactor throughput.

It is another object of the present invention to improve the homogeneity of the flow in the loop reactor.

It is a further object of the present invention to increase the solids concentration in the reactor.

It is yet another object of the present invention to increase the production of polymer in a slurry loop reactor.

Accordingly, the present invention discloses a slurry loop reactor having one or more loops and comprising on at least one of the one or more loops, either a by-pass line (2) connecting two points of the same loop (1) by an alternate route having a different transit time than that of the main route and/or a modified circulation pump with internal re-circulation, and/or a mixing element that improves the homogeneity of the circulating slurry. Said slurry loop reactor is capable of improving the mixing within the reactor.

Throughout the present description the loops forming the slurry loop reactor can be in parallel or in series and additionally, each loop can be folded.

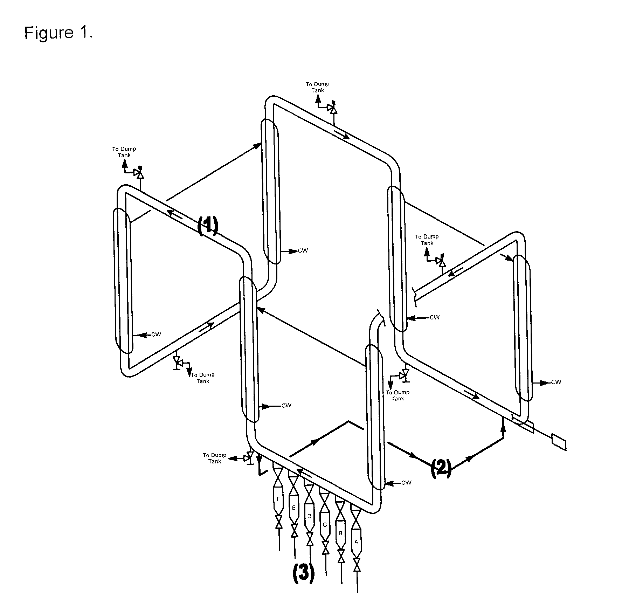

Figure 1 represents schematically the loop reactor (1) with a by-pass line (2) inserted between two points of the main loop. It also includes the settling legs (3).

Optionally, the by-pass may be jacketed.

Any one or more of the loop reactor modifications recited here-above can be implemented on any of one or more of the loops in the reactor.

The by-pass line carries a fraction of the slurry of from 0.5 to 50 % of the total flow rate, preferably of 1 to 15 % of the total flow rate.

The flow time through the by-pass line is different from the time necessary to travel through the main loop as the routes have different lengths. This difference in travel time results in longitudinal mixing that improves the homogeneity of the slurry within the reactor.

Preferably, the distance traveled by the slurry in the by-pass is shorter than that traveled in the main loop, and the slurry is re-injected in the main loop at an angle of from 1 to 90 degrees, preferably at an angle of from 30 to 60 degrees and more preferably at an angle of about 45 degrees.

The diameter of the by-pass is less than that of the main loop and the ratio DB/DLof the by-pass diameter DB to the loop diameter DL is of from 1:12 to 1:2, preferably of from 1:6 to 1:3.

The present invention further discloses the use of a by-pass line connecting two points of the main loop (1) by an alternate route having a different transit time than that of the main route, for improving the homogeneity of the circulating fluid in a slurry loop reactor.

In a second embodiment according to the present invention, the homogeneity of the fluid circulating through a slurry loop reactor is improved by modifying the circulating pump so that it operates with a significantly reduced efficiency, of from 30 to 75 %, significantly lower than the efficiency obtained on standard slurry loop reactors. The pump efficiency could potentially be reduced further.

This is achieved by allowing from 0.5 to 50 % of the flow, and preferably from 1 to 25 % of the flow, to be re-circulated from the pressure side of the impeller blade to the suction side of the same impeller blade.

The re-circulation is carried out by leaving an empty space between one or more blade(s) of the impeller and the shroud of the pump, said space being of the order of from 0.5 to 10 % of the pump radius and preferably of from 1 to 5 % of the pump radius.

Alternatively, the re-circulation can be achieved by the presence of holes in the impeller blades. The total surface of the holes is of from 0.1 to 35 % and, preferably of 0.5 to 15 %, of the surface of the blade measured in its central plane. The holes can have any shape and position and can be absent from some blades.

In a third embodiment according to the present invention, the radial homogeneity of the flow in the slurry loop reactor is improved by the insertion of fixed obstacles within the reactor.

The obstacles can be massive or in the shape of conduits.

The positions of the obstacles are selected to reduce the heterogeneities and are thus located where heterogeneities are most likely to occur such as for examples at curves or at pump discharge.

The polymer products obtained with the modified loop reactor according to the present invention have a bulk density that is from 1 to 5 % higher than that of the polymer products obtained with the unmodified loop reactor.

The molecular weight distribution (MWD) is defined by the polydispersity index D which is the ratio Mw/Mn of the weight average molecular weight Mw to the number average molecular weight Mn. It is typically reduced by 5 to 15 % in the polymer products obtained with the modified loop reactor according to the present invention.

The catalyst productivity is substantially improved without any loss in production. The catalyst productivity is typically increased by 10 to 50 %.

This improvement in catalyst productivity is obtained thanks to an increase of the residence time in the reactor and to the extension of the stable operation window. It has been observed that the solids content, measured as the ratio of the particle mass flow rate to the total mass flow rate, is increased by at least 1.5 %, preferably by at least 3 %.

### Examples.

The same loop reactor has been used to polymerize a given grade of high density polyethylene (HDPE) with and without a by-pass. The operating conditions were the same and they are summarised in Table I.

**TABLE I.**

| | Without by-pass | With by-pass |
|---|---|---|
| Number of data | 414 | 296 |
| Temperature °C | 107 | 107.6 |
| [C2⁻] wt% | 4.97 | 4.80 |
| [C6⁻] wt% | 0.04 | 0.04 |
| Productivity (g/g) | 2652 | 3651 7704 |
| Production (t/h) | 7565 | |
| HLMI g/10 min | 2.10 | 2.07 |

The HLMI was measured following the method of standard test ASTM D 1238 at 190 °C and under a load of 21.6 kg.

As can be observed, the catalyst productivity was substantial improved without any loss of production.

## Claims

1. A slurry loop reactor having one or more loops and comprising on at least one of the one or more loops either a by-pass line (2) connecting two points of the main loop (1) by an alternate route having a different transit time than that of the main route and/or a modified circulation pump with internal re-circulation, and/or a mixing element that improves the homogeneity of the circulating slurry.

2. The slurry loop according to claim 1 wherein the by-pass line carries a fraction of the slurry of from 0.5 to 50 % of the total flow rate.

3. The slurry loop according to claim 2 wherein the by-pass line carries a fraction of the slurry of from 1 to 15 % of the total flow rate.

4. The slurry loop according to any one of the preceding claims wherein the slurry traveling in the by pass line is re-injected in the main loop at an angle of from 1 to 90 degrees.

5. The slurry loop according to any one of the preceding claims wherein the ratio DB/DL of the diameter of the by-pass DB to that of the main loop DL is of from 1:12 to 1:2.

6. The slurry loop according to any one of the preceding claims wherein the ratio DB/DL of the diameter of the by-pass DB to that of the main loop DL is of from 1:6 to 1:3.

7. The slurry loop reactor according to any one of the preceding claims capable of improving the longitudinal mixing within the reactor, **characterised in that** the circulating pump operates at an efficiency between 30 to 75 %.

8. The slurry loop reactor of claim 7 wherein the pump efficiency is reduced by leaving an empty space between one or more blades of the impeller and the shroud of the pump.

9. The slurry loop reactor of claim 7 or claim 8 wherein the pump efficiency is reduced by the presence of holes in the impeller blades.

10. The slurry loop reactor according to any one of the preceding claims having fixed obstacle therein to improve the radial homogeneity of the flow in the slurry.

11. Use of the slurry loop reactor according to any one of the preceding claims to improve the catalytic productivity without any loss of polymer production.

12. Use of the slurry loop reactor according to any one of claims 1 to 10 to increase the bulk density of the polymer product.

13. Use of the slurry loop reactor according to any one of claims 1 to 10 to increase the stable operation window.

14. Use of the slurry loop reactor according to any one of claims 1 to 10 to improve the homogeneity of the longitudinal flow in the reactor.

15. Use of the slurry loop reactor according to any one of claims 1 to 10 to increase the solids content in the reactor by a factor of at least 1.5 %, said solid content being defined as the ratio of the particle mass flow rate to the total mass flow rate.
